# EUROPÄISCHE PATENTSCHRIFT

(11) **EP 3 120 064 B1**
(45) Veröffentlichungstag und Bekanntmachung des Hinweises auf die Patenterteilung: **12.09.2018**
(21) Anmeldenummer: 15711418.2
(22) Anmeldetag: 09.03.2015
(51) Int. Cl.: F16L 17/10, F16L 21/08

(54) **STECKMUFFE**
PLUG-TYPE SLEEVE
MANCHON ENFICHABLE

(30) Priorität: 20.03.2014 CH 428142014
(43) Veröffentlichungstag der Anmeldung: 25.01.2017
(73) Patentinhaber: Wüst, Theodor, 8630 Rüti ZH (CH)
(72) Erfinder: Wüst, Theodor, 8630 Rüti ZH (CH)
(74) Vertreter: Bohest AG Branch Ostschweiz
(86) Internationale Anmeldenummer: PCT/CH2015/000038
(87) Internationale Veröffentlichungsnummer: WO 2015/139148

(56) Entgegenhaltungen:
- WO-A1-00/53964
- FR-A5- 2 166 593
- GB-A- 556 256
- US-A- 3 843 167

## Beschreibung

Die Erfindung betrifft eine Steckmuffe gemäss dem Oberbegriff des unabhängigen Patentanspruchs 1.

Eine solche Steckmuffe ist aus der FR 2 166 593 A bekannt. Für die Verbindung von Rohrleitungen, insbesondere Kunststoffrohrleitungen, werden häufig Steckmuffen eingesetzt, in welche die Endabschnitte der zu verbindenden Rohrleitungen von zwei gegenüberliegenden Seiten eingeführt und dann darin dichtend fixiert werden. Alternativ können die Steckmuffen auch am Ende einer Rohrleitung ausgebildet sein.

Bei einer weit verbreiteten Art solcher Steckmuffen erfolgt die Fixierung mittels Ringdichtungen aus elastomerem Material, welche gleichzeitig auch für die erforderliche Dichtigkeit der Verbindung sorgen. Die Ringdichtungen befinden sich in umlaufenden Nuten der Steckmuffe und werden beim Einführen der Endabschnitte der zu verbindenden Rohrleitung bzw. Rohrleitungen zwischen einer Innenwand der Steckmuffe und den Aussenflächen der Endabschnitte radial gequetscht, so dass sie dichtend an den Aussenflächen der Endabschnitte anliegen und die Endabschnitte der Rohrleitungen im Reibschluss festhalten.

Ein Vorteil solcher Steckmuffen ist, dass sie konstruktiv sehr einfach sind und dass zur Verbindung der Rohrleitungen keine weiteren Hilfsmittel erforderlich sind. Ein für viele Anwendungszwecke entscheidender Nachteil besteht aber darin, dass solche Steckmuffen einen relativ hohen Kraftaufwand benötigen, um die Endabschnitte der zu verbindenden Rohrleitungen in die Steckmuffe einzuführen, da die erforderliche starke Quetschung der Ringdichtungen der Einführung der Endabschnitte einen erheblichen Widerstand entgegensetzt. Durch geeignete Dimensionierung können die erforderliche Quetschung der Ringdichtungen und damit der entgegengesetzte Widerstand zwar reduziert werden, dann wird aber gleichzeitig auch die erreichbare Auszugsfestigkeit herabgesetzt, was in vielen Anwendungsfällen unerwünscht oder unzulässig ist.

Im Zusammenhang mit Elektrokabeln werden Steckmuffen z.B. für Kabelverschraubungen zur Zugentlastung eingesetzt. Bei den meisten Kabelverschraubungen, welche Dichtheit und eine gewisse Ausziehkraft garantieren müssen, ist in der Steckmuffe eine Ringdichtung aus Weichgummi angeordnet, welche mittels einer Überwurfmutter axial gespannt und dadurch radial einwärts gequetscht werden kann, wobei sie auf den Kabelmantel drückt und so das Kabel dicht festhält. Für Rohrverbindungen sind solche Steckmuffen mit Überwurfmuttern aber nur bedingt geeignet.

Durch die vorliegende Erfindung soll nun unter Vermeidung der geschilderten Nachteile des Stands der Technik eine universell einsetzbare Steckmuffe geschaffen werden, welche sich durch einfache Konstruktion und praktisch kraftlose Montage auszeichnet und mit der gleichzeitig neben einer zuverlässigen Abdichtung auch eine extrem hohe Auszugsfestigkeit erreichbar ist.

Die Lösung dieser der Erfindung zugrundeliegenden Aufgabe besteht in der Steckmuffe gemäss den Merkmalen des unabhängigen Anspruchs 1.

Weitere zweckmässige und besonders vorteilhafte Ausgestaltungen der erfindungsgemässen Steckmuffe sind Gegenstand der abhängigen Ansprüche.

In seiner allgemeinsten Form besteht das Wesen der erfindungsgemässen Steckmuffe in Folgendem: Eine Steckmuffe zur Befestigung auf einem insbesondere Stangen-, kabel- oder rohrförmigen Gegenstand umfasst ein erstes Ende, das eine Öffnung für die Aufnahme eines Abschnitts des Gegenstands und ein Klemmelement aufweist, welche an eine Aussenfläche des genannten Abschnitts anlegbar ist, und ein im Wesentlichen hülsenförmiges, mit dem Klemmelement in Längsrichtung der Steckmuffe auf Schub koppelbares Spannelement zur Beaufschlagung des Klemmelements mit einer axialen Kraft, wobei das Klemmelement so geformt und ausgebildet ist, dass es sich bei Beaufschlagung mit der axialen Kraft in radialer Richtung verengt, und wobei das Spannelement so ausgebildet und angeordnet ist, dass eine äussere Beaufschlagung mit einem fluiden Druckmedium eine axiale Verlängerung des Spannelements und dadurch die Beaufschlagung des Klemmelements mit der axialen Kraft bewirkt. Das Spannelement ist von einer Ausgangsgestalt über eine Totpunktgestalt in eine Endgestalt überführbar ausgebildet, wobei die Länge des Spannelements in der Ausgangsgestalt am kleinsten, in der Totpunktgestalt am grössten und in der Endgestalt etwas kleiner als in der Totpunktgestalt aber grösser als in der Ausgangsgestalt ist. Das Spannelement weist eine Schnappfunktion auf, wobei das Spannelement von seiner Totpunktgestalt sprungartig in seine Endgestalt übergeht und ohne äussere Krafteinwirkung in dieser verharrt.

Gemäss einer bevorzugten Ausführungsform besteht das Wesen der Erfindung in Folgendem: Eine Steckmuffe zur Befestigung auf einem insbesondere stangen-, kabel- oder rohrförmigen Gegenstand umfasst ein erstes Ende, das eine Öffnung für die Aufnahme eines Abschnitts des Gegenstands und eine umlaufende Nut mit einer darin angeordneten Ringdichtung aufweist, die an eine Aussenfläche des genannten Abschnitts anlegbar ist, und ein im Wesentlichen hülsenförmiges, mit der Ringdichtung in Längsrichtung der Steckmuffe auf Schub koppelbares Spannelement zur axialen Kompression und dadurch verursachten radialen Verengung der Ringdichtung, wobei das Spannelement so geformt und ausgebildet ist, dass eine äussere Beaufschlagung mit einem fluiden Druckmedium eine axiale Verlängerung des Spannelements bewirkt.

Alternativ weist das Klemmelement ein an seiner Aussenseite im Wesentlichen konisches Ringelement auf, welches mit einer im ersten Ende ausgebildeten, vorzugsweise im Wesentlichen gegengleich konischen Gegenfläche so zusammenarbeitet, dass das Ringelement durch die Beaufschlagung mit der axialen Kraft relativ zur Gegenfläche axial verschiebbar und dabei radial verengbar ist.

Durch die spezielle Ausbildung des Spannelements kann einerseits der Abschnitt des Gegenstands praktisch kraftlos in die Steckmuffe eingeführt werden und kann anderseits eine extrem gute Dichtwirkung sowie eine extrem hohe Auszugsfestigkeit erreicht werden.

Gemäss einem weiteren vorteilhaften Aspekt der Erfindung ist das Spannelement so ausgebildet, dass es in seiner Ausgangsgestalt im Wesentlichen tonnenartig nach aussen gewölbt oder geknickt, in seiner Totpunktgestalt im Wesentlichen gestreckt und in seiner Endgestalt im Wesentlichen kissenartig nach innen gewölbt oder geknickt ist.

Vorteilhafterweise ist im ersten Ende eine umlaufende Kammer ausgebildet, ist das Spannelement in der Kammer in Längsrichtung neben dem Klemmelement angeordnet und erstreckt sich das Spannelement in Längsrichtung im Wesentlichen von einer stirnseitigen Begrenzungsfläche der Kammer bis zum Klemmelement, wobei das Spannelement zumindest in einem mittleren Abschnitt radial einwärts verformbar ausgebildet ist, wobei die radiale Einwärtsverformung des Spannelements eine Verlängerung in Längsrichtung bewirkt, und wobei durch die Verlängerung des Spannelements das Klemmelement mit der axialen Kraft beaufschlagt wird.

Zweckmässigerweise weist die Steckmuffe einen in die umlaufende Kammer mündenden Anschluss für ein fluides Druckmedium auf.

Zweckmässigerweise ist der Anschluss mit einer abnehmbaren oder aufbrechbaren Plombe versehen.

Gemäss einem weiteren vorteilhaften Aspekt der Erfindung weist das Spannelement einen ersten Tragring und im Abstand zu diesem einen zweiten Tragring und zwischen den beiden Tragringen eine Mehrzahl von Paaren plattenförmiger Glieder auf, wobei jeweils die Glieder eines Paares in Längsrichtung nebeneinander angeordnet und schwenkbar aneinander angelenkt sind und wobei jeweils ein Glied eines Paares am ersten Tragring und das andere Glied eines Paares am zweiten Tragring kippbar angelenkt ist, und wobei jeweils die beiden Glieder eines Paares zu einander geneigt angeordnet sind.

Vorteilhafterweise sind dabei die Glieder und die Tragringe von einem elastischen Dichtungsschlauch umschlossen.

Gemäss einer vorteilhaften Ausführungsform umfasst das Klemmelement eine Ringdichtung, welche sich an einer Umfangsfläche der Nut einerseits und an einer Schulter der Nut anderseits abstützt, und ist im ersten Ende eine sich an die Nut anschliessende umlaufende Kammer ausgebildet, wobei das Spannelement in der Kammer in Längsrichtung neben der Ringdichtung angeordnet ist und sich in Längsrichtung im Wesentlichen von einer stirnseitigen Begrenzungsfläche der Kammer bis zur Ringdichtung erstreckt, und wobei das Spannelement zumindest in einem mittleren Abschnitt radial einwärts verformbar ausgebildet ist, wobei die radiale Einwärtsverformung des Spannelements eine Verlängerung des Spannelements in Längsrichtung bewirkt, und wobei durch die Verlängerung des Spannelements die Ringdichtung axial komprimiert wird.

Vorteilhafterweise umfasst die Steckmuffe zur Stabilitätsverbesserung eine in einen rohrförmigen Gegenstand einführbare Stützhülse.

Vorteilhafterweise ist die Steckmuffe mit einem Indikator versehen, welcher anzeigt, ob das Spannelement seine Ausgangsgestalt oder seine Endgestalt einnimmt.

Gemäss einem weiteren vorteilhaften Aspekt der Erfindung weist die Steckmuffe ein mit einem ersten Ende einstückiges oder verbundenes und im Wesentlichen gleich wie das erste Ende ausgebildetes und ausgestattetes zweites Ende auf. Dadurch kann die Steckmuffe zur Verbindung von zwei Gegenständen, insbesondere Rohrleitungen eingesetzt werden.

Vorteilhafterweise sind dabei die Klemmelemente bzw. konkreter Ringdichtungen in den beiden Enden an den einander zugewandten Seiten der beiden Enden angeordnet.

Zweckmässigerweise ist dabei am ersten Ende und am zweiten Ende je ein eigener Anschluss für ein fluides Druckmedium vorgesehen. Alternativ kann die Steckmuffe auch einen beiden Enden gemeinsamen Anschluss für ein fluides Druckmedium aufweisen.

Im Folgenden wird die Erfindung anhand von in der Zeichnung dargestellten Ausführungsbeispielen näher erläutert. In der Zeichnung zeigen:
- Fig. 1: einen Längsschnitt durch ein erstes Ausführungsbeispiel der erfindungsgemässen Steckmuffe im ungespannten Zustand;
- Fig. 2: einen Längsschnitt analog Fig. 1, jedoch im gespannten Zustand;
- Fig. 3: eine aufgeschnittene Schrägansicht eines Spannelements der Steckmuffe der Fig. 1;
- Fig. 4: eine aufgeschnittene Schrägansicht eines Spannelements der Steckmuffe der Fig. 2;
- Fig. 5: eine schematische Detailschnitt durch ein Spannelement;
- Fig. 6: einen Längsschnitt durch ein zweites Ausführungsbeispiel der erfindungsgemässen Steckmuffe im gespannten Zustand;
- Fig. 7: einen Längsschnitt durch ein drittes Ausführungsbeispiel der erfindungsgemässen Steckmuffe, ebenfalls im gespannten Zustand;
- Fig. 8: einen Detailschnitt der Steckmuffe;
- Fig. 9: einen Längsschnitt durch ein viertes Ausführungsbeispiel der erfindungsgemässen Steckmuffe im gespannten Zustand;
- Fig. 10: einen Längsschnitt durch ein fünftes Ausführungsbeispiel der erfindungsgemässen Steckmuffe im ungespannten Zustand;
- Fig. 11: einen Längsschnitt durch ein fünftes Ausführungsbeispiel der erfindungsgemässen Steckmuffe im gespannten Zustand;
- Fig. 12: einen Detailschnitt der Steckmuffe nach Fig. 11;
- Fig. 13: eine Klemmsicherungsscheibe;
- Fig. 14: einen Längsschnitt durch ein sechstes Ausführungsbeispiel der erfindungsgemässen Steckmuffe im ungespannten Zustand;
- Fig. 15: einen Längsschnitt durch ein sechstes Ausführungsbeispiel der erfindungsgemässen Steckmuffe im gespannten Zustand;
- Fig. 16: einen Detailschnitt der Steckmuffe nach Fig. 14;
- Fig. 17: einen Detailschnitt der Steckmuffe nach Fig. 15;
- Fig. 18: einen Längsschnitt durch ein siebtes Ausführungsbeispiel der erfindungsgemässen Steckmuffe im ungespannten Zustand;
- Fig. 19: einen Längsschnitt durch ein siebtes Ausführungsbeispiel der erfindungsgemässen Steckmuffe im gespannten Zustand;
- Fig. 20: einen Detailschnitt der Steckmuffe nach Fig. 18; und
- Fig. 21: einen Detailschnitt der Steckmuffe nach Fig. 19.

Für die nachfolgende Beschreibung gilt die folgende Konvention: Sind in einer Figur nicht alle Teile mit Bezugszeichen versehen, so wird auf die jeweils anderen Figuren in Verbindung mit den jeweils zugehörigen Beschreibungsteilen verwiesen. Unter axial bzw. Längsrichtung wird die Richtung verstanden, in der im praktischen Einsatz der mit der Steckmuffe zu verbindende Gegenstand in die Steckmuffe eingeschoben bzw. die Steckmuffe auf den Gegenstand aufgeschoben wird. Dementsprechend ist unter radial jede zur Längsrichtung senkrecht stehende Richtung zu verstehen.

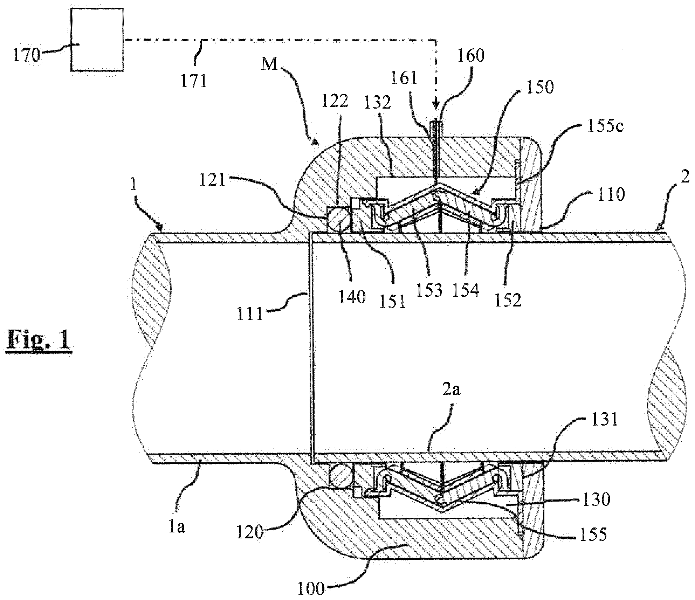

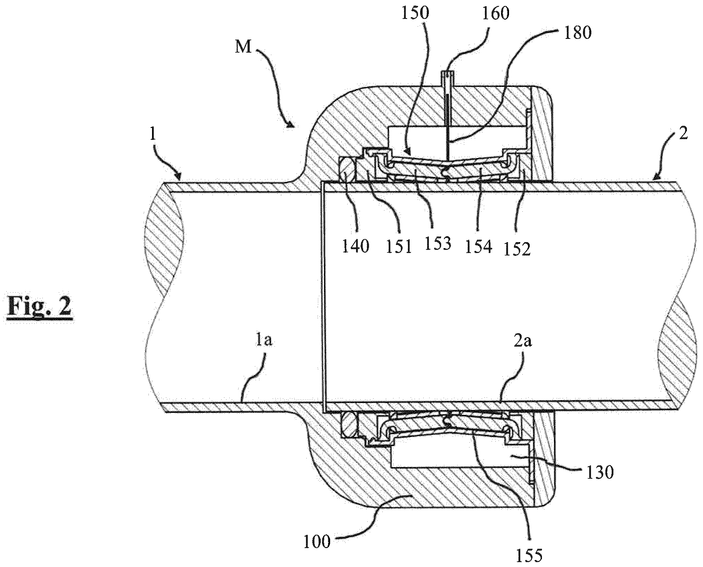

Die in den Figuren 1 und 2 dargestellte, als Ganze mit M bezeichnete Steckmuffe ist hier am Endabschnitt 1a einer Rohrleitung 1 ausgebildet. Sie umfasst ein erstes Ende 100 mit einer Öffnung 110, durch welche ein Endabschnitt 2a einer mit der Steckmuffe M zu verbindenden Rohrleitung 2 in die Steckmuffe bis zu einer in dieser ausgebildeten Anschlagschulter 111 eingeführt ist. Im Ende 100 sind eine umlaufende Nut 120 mit einer ringförmigen Schulter 121 und einer Umfangsfläche 122 sowie eine umlaufende Kammer 130 mit einer ringförmigen seitlichen Begrenzungsfläche 131 und einer Umfangsfläche 132 ausgebildet. In die Nut 120 ist ein Klemmelement in Gestalt einer Ringdichtung 140 aus einem elastomeren (oder anderem) Material eingelegt, welche sich an der Schulter 121 und der Umfangsfläche 122 der Nut 120 abstützt. In der Kammer 130 ist ein im Wesentlichen hülsenförmiges, als Ganzes mit 150 bezeichnetes Spannelement angeordnet, welches sich in Längsrichtung von der seitlichen Begrenzungsfläche 131 der Kammer 130 bis zur Ringdichtung 140 erstreckt. Die Ringdichtung 140 und das hülsenförmige Spannelement 150 umschliessen den in der Steckmuffe befindlichen Endabschnitt 2a der Rohrleitung 2. Aussen ist am Ende 100 der Steckmuffe ein Anschluss 160 für ein fluides Druckmedium angeordnet, welcher Anschluss über eine Bohrung 161 in die Kammer 130 mündet. Über den Anschluss 160 kann z.B. via eine Leitung 171 ein fluides Druckmedium aus einem Druckmediumbehälter 170 in die Kammer 130 der Steckmuffe zugeführt werden. Anstelle des Druckmediumbehälters kann auch eine geeignete Druckmediumpumpe bzw. ein Kompressor vorgesehen sein.

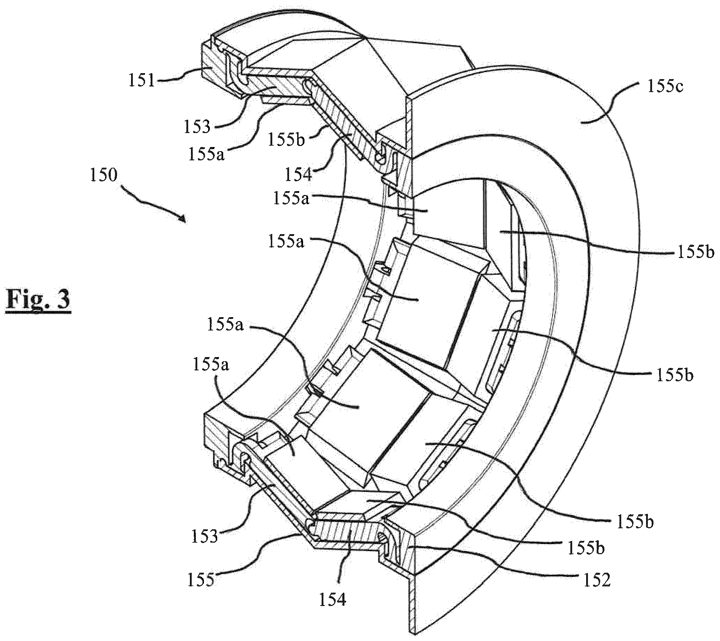

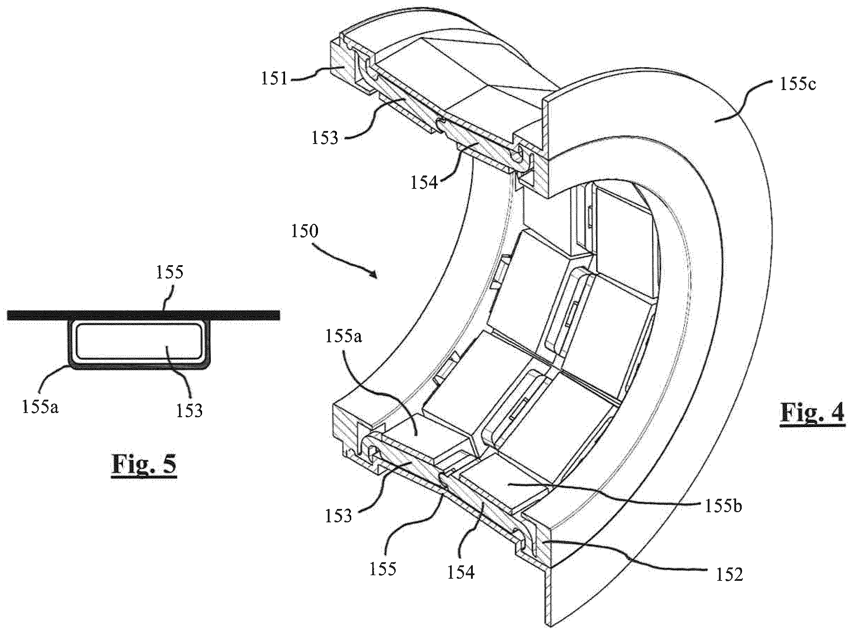

Die nähere Ausbildung des hülsenförmigen Spannelements 150 geht aus den Schrägansichten der Figuren 3 und 4 hervor. Es umfasst einen ersten Tragring 151 und zu diesem in axialer Richtung beabstandet einen zweiten Tragring 152. Zwischen den beiden Tragringen 151 und 152 sind mehrere, z.B. zehn Paare von plattenförmigen Gliedern 153 und 154 aufgehängt, welche zusammen einen Mantel des Spannelements 150 bilden. Die beiden Tragringe 151 und 152 und die plattenförmigen Glieder 153 und 154 sind von einem elastischen Dichtungsschlauch 155 umschlossen, der auf einer Seite einen radial auswärts ragenden Befestigungsflansch 155c aufweist. An der Innenseite ist der Dichtungsschlauch 155 mit Taschen 155a und 155b versehen, welche die Glieder 153 und 154 umschliessen. Letzteres wird insbesondere auch aus der schematischen Schnittdarstellung der Fig. 5 deutlich.

Die plattenförmigen Glieder 153 und 154 jedes Paars sind in Längsrichtung nebeneinander angeordnet und (begrenzt) schwenkbar aneinander angelenkt. Von jedem Paar ist ein Glied 153 am einen Tragring 151 und das andere Glied 154 am anderen Tragring 152 (begrenzt) schwenk- bzw. kippbar angelenkt. Die beiden Glieder 153 und 154 jedes Paars sind jeweils zu einander geneigt, so dass der durch die Glieder 153 und 154 gebildete Mantel des Spannelements 150 in der Mitte zwischen den beiden Tragringen 151 und 152 einen grösseren Durchmesser aufweist als in der Nähe der Tragringe. Das Spannelement 150 hat also im Bereich seines Mantels bzw. der Glieder 153 und 154 im Wesentlichen eine tonnenartig ausgebauchte bzw. geknickte Gestalt, welche im Folgenden als Ausgangsgestalt bezeichnet ist.

Im Folgenden wird die Funktionsweise der Steckmuffe M erläutert.

Zur Befestigung der Steckmuffe M am Endabschnitt 2a der Rohrleitung 2 bzw. umgekehrt des Endabschnitts 2a in der Steckmuffe M wird der Endabschnitt 2a der Rohrleitung 2, wie in Fig. 1 dargestellt, durch die Öffnung 110 in das Ende 100 der Steckmuffe M eingeführt. Da die Ringdichtung 140 zu diesem Zeitpunkt noch nicht gespannt bzw. komprimiert ist, kann die Einführung des Endabschnitts 2a praktisch kraftlos erfolgen.

Als nächstes erfolgt die Fixierung des Endabschnitts 2a in der Steckmuffe M mittels des Spannelements 150. Dazu wird die Aussenfläche des durch die Glieder 153 und 154 gebildeten Mantels des Spannelements 150 mit einem fluiden Druckmedium beaufschlagt. Das Druckmedium, bei dem es sich typischerweise um Druckluft handeln kann, wird dazu über den Anschluss 160 in die Kammer 130 eingeführt. Durch die Druckbeaufschlagung des Spannelements 150 wird dieses radial einwärts verformt, wobei sich der Winkel zwischen den Gliedern 153 und 154 verflacht, bis die Glieder 153 und 154 der Paare jeweils in einer Ebene liegen. Durch die Einwärtsverformung des Mantels werden die beiden Tragringe 151 und 152 auseinander gedrückt, so dass sich das Spannelement 150 in Längsrichtung ausdehnt. Dadurch drückt der Tragring 151 des Spannelements 150 axial gegen die Ringdichtung 140 und quetscht diese in axialer Richtung. Da sich das elastomere Material der Ringdichtung nahezu inkompressibel verhält, wird die Ringdichtung 140 radial einwärts verengt und drückt dabei mit grosser Kraft auf die Aussenfläche des Endabschnitts 2a der Rohrleitung 2, wodurch dann der Endabschnitt im Reibschluss festgehalten wird.

Wenn der durch die Glieder 153 und 154 gebildete Mantel soweit einwärts verformt ist, dass die Glieder 153 und 154 jeweils eines Paares in einer Ebene liegen, hat das Spannelement 150 seine grösste Ausdehnung in Längsrichtung erreicht. Die so gestreckte Gestalt des Spannelements 150 wird im Folgenden als Totpunktgestalt bezeichnet.

Wie aus den Figuren 1 und 2 hervorgeht, befinden sich die Glieder 153 und 154 in ihren an den Tragringen angelenkten Bereichen in einem kleinen radialen Abstand über dem Endabschnitt 2a der Rohrleitung 2. Dies ermöglicht es, den durch die Glieder 153 und 154 gebildeten Mantel des Spannelements 150 über die Totpunktgestalt hinaus noch geringfügig weiter radial einwärts zu verformen, bis die Glieder 153 und 154 an der Aussenfläche des Endabschnitts 2a der Rohrleitung 2 anstehen. Dabei stehen die Glieder 153 und 154 in einem kleinen Winkel zu einander. In dieser Stellung der Glieder 153 und 154 ist die Gestalt des Spannelements im Wesentlichen leicht kissenförmig gewölbt bzw. geknickt. Diese Gestalt des Spannelements wird im Folgenden als Endgestalt bezeichnet. Da die Endgestalt des Spannelements 150 nur geringfügig von der Totpunktgestalt abweicht, ist auch die Gesamtlänge des Spannelements in dieser Endgestalt nur geringfügig kleiner als in seiner Totpunktgestalt. Dies wiederum hat zur Folge, dass die vom Spannelement 150 auf die Ringdichtung 140 ausgeübte axiale Presskraft nur unerheblich kleiner wird und die von der Ringdichtung auf den Endabschnitt 2a der Rohrleitung 2 ausgeübte Festhaltekraft dadurch praktisch nicht beeinträchtigt wird. Die Fig. 2 zeigt die Steckmuffe im aktivierten bzw. gespannten Zustand, bei dem das Spannelement 150 seine Endgestalt einnimmt. Die Fig. 4 zeigt das Spannelement 150 in dieser Endgestalt.

Durch die spezielle Ausbildung und Anordnung der Glieder 153 und 154 wird eine Art Kniehebelsystem gebildet, welches dem Spannelement 150 eine Schnappfunktion verleiht. Damit ist gemeint, dass sich das Spannelement 150 sprunghaft in seine Endgestalt verformt, sobald die durch das Druckmedium bewirkte Einwärtsverformung etwas über die Totpunktgestalt hinaus gegangen ist. Die Endgestalt ist stabil und das Spannelement verharrt ohne äussere Krafteinwirkung in dieser Endgestalt, so dass für die Aufrechterhaltung der Verbindung die Beaufschlagung mit dem Druckmedium nicht weiter erforderlich ist.

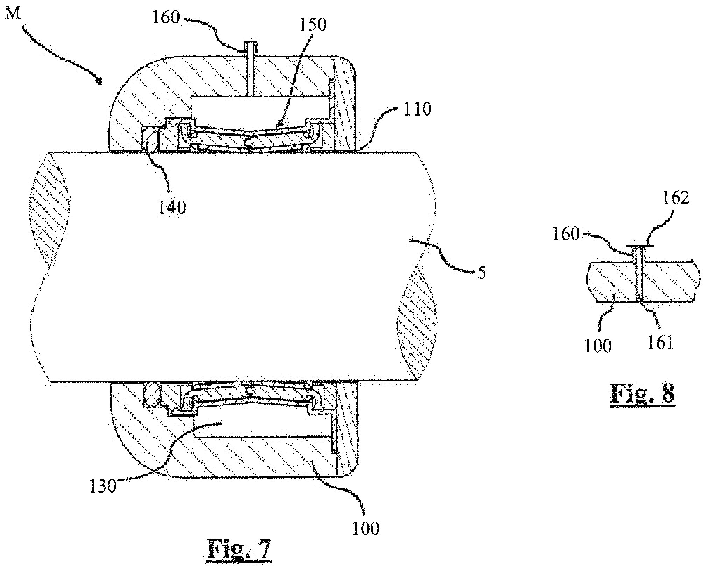

Wie insbesondere die Fig. 2 erkennen lässt, ist die Steckmuffe M mit einem Indikator versehen, welcher anzeigt, in welchem Zustand sich das Spannelement befindet. Der Indikator ist hier als Stift 180 ausgebildet, der auf dem durch die Glieder 153 und 154 gebildeten Mantel des Spannelements 150 aufsteht und sich radial auswärts in die Öffnung 161 hinein erstreckt. Im nicht aktivierten Zustand des Spannelements 150 (Fig. 1) ragt der Stift 180 so weit durch die Öffnung 161, dass er von aussen sichtbar ist. Im aktivierten Zustand des Spannelements 150 (Fig. 2) befindet er sich weiter innen und ist nicht sichtbar. Anstelle des Indikators 180 kann z.B. der Anschluss 160 wie in Fig. 8 dargestellt mit einer Plombe 162 versehen sein, die zwecks Druckmediumzufuhr entfernt oder aufgebrochen wird.

Ferner kann die Steckmuffe mit Sicherungsmitteln ausgestattet sein, welche verhindern, dass das Spannelement ohne in die Steckmuffe eingeführte Rohrleitung über die Endgestalt hinaus nach innen verformt werden kann. Dies kann z.B. durch eine die gegenseitige Verschwenkung bzw. Verkippung begrenzende Ausbildung der Glieder 153 und 154 erreicht werden.

Die erfindungsgemässe Steckmuffe kann ganz einfach durch Anlegen eines Differenzdrucks über den Anschluss 160 wieder gelöst werden. Dabei nehmen die mit dem Dichtungsschlauch 155 integralen Taschen 155a und 155b die Glieder 153 und 154 radial auswärts mit, bis das Spannelement 150 wieder seine Ausgangsgestalt gemäss Fig. 1 erreicht hat. Durch die dabei bewirkte axiale Verkürzung des Spannelements wird die Ringdichtung 140 wieder entlastet, so dass der Rohrabschnitt 2a praktisch kraftlos aus der Steckmuffe M ausgezogen werden kann.

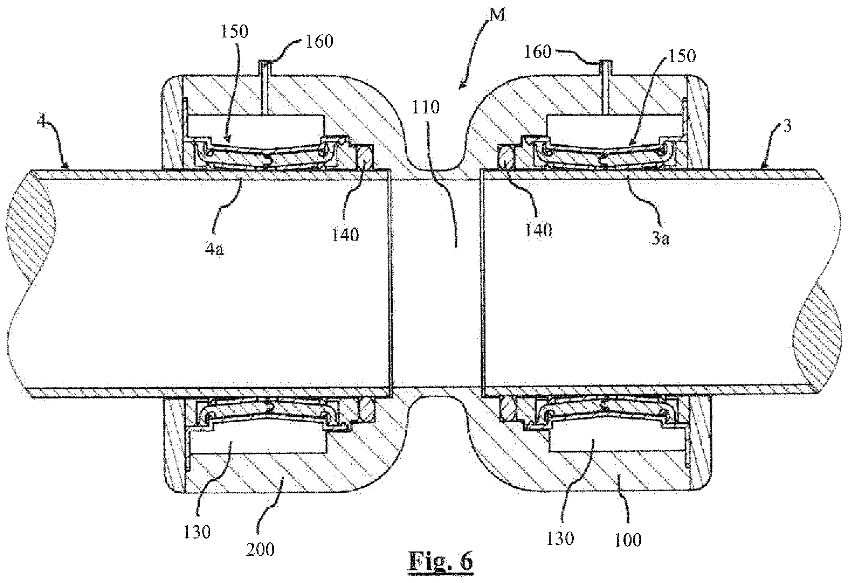

In Fig. 6 ist ein Ausführungsbeispiel der erfindungsgemässen Steckmuffe dargestellt, bei dem die Steckmuffe M als eigenständiges Teil ausgebildet ist und zwei Rohrleitungen 3 und 4 verbindet.

Die Steckmuffe M gemäss diesem Ausführungsbeispiel umfasst zwei Enden 100 und 200, die gleich ausgebildet und ausgestattet sind wie das Ende 100 der Steckmuffe gemäss den Figuren 1 und 2. Die beiden Enden 100 und 200 sind spiegelbildlich angeordnet und einstückig ausgebildet. Alternativ könnten die beiden Enden auch als separate Teile ausgebildet und in geeigneter Weise miteinander verbunden sein. Die beiden Enden 100 und 200 haben eine gemeinsame durchgehende Öffnung 110, in die von gegenüberliegenden Seiten je ein Endabschnitt 3a und 4a der zu verbindenden Rohrleitungen 3 bzw. 4 eingeführt ist. Da die Enden 100 und 200 der Steckmuffe identisch wie das in den Figuren 1 und 2 gezeigte Ende 100 ausgebildet und ausgestattet sind, sind funktionsgleiche Teile auch mit den gleichen Bezugszeichen wie in den Figuren 1 und 2 bezeichnet.

Die Zufuhr von Druckmedium erfolgt bei diesem Ausführungsbeispiel über zwei separate, an je einem der Enden 100 und 200 angeordnete Anschlüsse 160. Die Kammern 130 der beiden Enden könnten aber auch kommunizierend verbunden sein, wobei dann für die Zufuhr des Druckmediums ein einziger gemeinsamer Anschluss genügen würde.

Im Ausführungsbeispiel der Fig. 7 ist die Steckmuffe ebenfalls als eigenständiges Teil ausgebildet, welches hier eine Kabelmuffe bildet. Das Ende 100 der Steckmuffe besitzt eine durchgehende Öffnung 110, durch welche ein Kabel 5 hindurchgeführt ist. Im Übrigen ist die Steckmuffe identisch ausgebildet und ausgestattet wie im Ausführungsbeispiel der Figuren 1 und 2, und funktionsgleiche Teile sind daher auch mit den gleichen Bezugszeichen wie in den Figuren 1 und 2 bezeichnet.

Zur Vergrösserung der Dichtwirkung und der Spannkraft (Auszugsfestigkeit) können pro Ende der Steckmuffe quasi in einer Serienschaltung auch zwei oder mehrere Ringdichtungen mit jeweils zugeordneten Spannelementen vorgesehen sein. Durch entsprechende Ausgestaltung der Rohroberfläche kann die Verbindung auch formschlüssig ausgestaltet sein. Durch Einbringung von Mitteln zur Erhöhung der Reibung (z. B. Sand) in die Kontaktzone der Ringdichtung kann Haltekraft weiter verstärkt werden. Die Ringdichtung 140 besteht typischerweise aus einem elastomeren Material, kann aber für besondere Einsatzfälle auch aus Hartgummi, Metall oder einem anderen als elastomeren Kunststoff bestehen. Die Ringdichtung kann auch hohl ausgebildet sein. Der Dichtring kann auch aus einem Material mit einem speziell hohen Haftreibungskoeffizienten (bezüglich des zu haltenden Gegenstands bzw. Rohrs) hergestellt sein, wobei sich diese Eigenschaft z.B. durch Zugabe von speziellen Substanzen (z.B. Sand) zum Ausgangsmaterial bei der Herstellung des Dichtrings erzielen lässt.

Eine Verbesserung der Dichtwirkung bzw. Erhöhung der Auszugskraft kann auch durch eine reibungserhöhende Oberflächenstruktur der zu klemmenden Gegenstände bzw. Rohre im Bereich der Klemmstelle erreicht werden, z.B. durch Anbringung von Rillen oder Aufbringung von Sand oder dergleichen.

In den vorstehend beschriebenen Ausführungsbeispielen ist das Spannelement 150 mit plattenförmigen Gliedern 153 und 154 ausgestattet. Selbstverständlich sind aber auch andere Realisierungsformen des Spannelements möglich, solange gewährleistet ist, dass durch Einwärtsdeformation des Spannelements aufgrund äusserer Beaufschlagung mit einem Druckmedium eine axiale Verlängerung des Spannelements erreicht wird und das Spannelement ausreichend steif ausgebildet ist, um die erforderliche Spannkraft auf die Ringdichtung zu übertragen. Insbesondere kann das Spannelement auch einstückig, z.B. aus einem geeigneten Kunststoff oder aus Metall ausgebildet sein.

Wie aus den vorstehenden Erläuterungen hervorgeht, erfolgt die Fixierung und Abdichtung des Rohres durch ein axial verpresstes gummielastisches Element (Ringdichtung). Durch die Kraftwirkung eines unter Überdruck stehenden flüssigen oder gasförmigen Mediums auf eine Fläche (Mantel des Spannelements) wird eine radial zur Rohrachse nach innen wirkende primäre Kraft erzeugt. Ein mechanisches Übersetzungselement (gebildet durch die Glieder des Spannelements) übersetzt und verstärkt diese Kraft weiter und leitet sie in paralleler Richtung zur Rohrachse auf das Klemm- und Dichtelement (Ringdichtung). Halte- und Dichtfunktion werden durch das gleiche gummielastische Element wahrgenommen.

Das rohrförmige Spannelement (rund oder vieleckig) besteht aus mehreren, parallel zur Rohrachse gerichteten einzelnen Gliedern, die so ausgebildet sind, dass sie bei Einwirkung einer radial von aussen einwirkenden Kraft eine Verlängerung in Achsenrichtung ausführen und dabei eine Kraftwirkung entfalten können. Diese Glieder sind so ausgebildet, dass bei der Umsetzung der radial von aussen wirkenden Kraft eine starke Übersetzung in eine axial gerichtete Kraft stattfindet.

Diese Glieder sind so ausgebildet, dass bei Überschreitung einer bestimmten linearen Ausdehnung diese Elemente ihre Länge (fast vollständig) beibehalten (Schnappfunktion) und auch bei Wegfall der von aussen wirkenden Kraft hervorgerufen durch das Druckmedium nicht zurückspringen.

Die Rohre können kraftlos zusammengefügt werden. Der mechanische Verbindungsprozess erzeugt keine externen Reaktionskräfte oder Momente. Die Verbindung erfordert nur ein Minimum an Vorbereitung (Ablängen und evtl. Schnittkante säubern). Nach erfolgtem Verbindungsprozess ist keine Abkühl- oder Aushärtezeit erforderlich. Die Verbindung kann sofort belastet und es kann damit unmittelbar weiter gearbeitet werden.

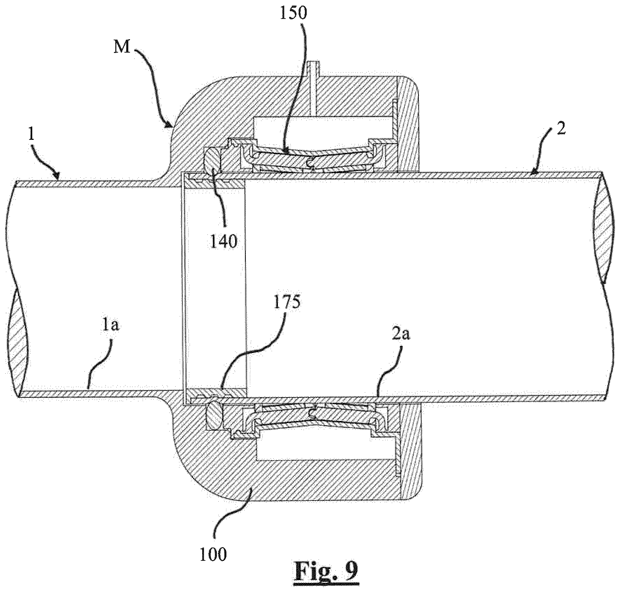

Die grosse Flächenpressung auf das eingespannte Kunststoffrohr führt zu einer parti-ellen Einschnürung im Rohr, welche zu einem quasi formschlüssigen Verbund führt. Ist diese Einschnürung unerwünscht oder zu gross, so kann die Rohrinnenwand mit einer Stützhülse 175 verstärkt werden, so wie dies im Ausführungsbeispiel der Fig. 9 dargestellt ist. Die Stützhülse 175 kann dabei an ihrer äusseren Oberfläche z.B. durch Rillen auch reibungserhöhend strukturiert ausgebildet sein. Unter Einwirkung der Klemmkraft werden sich dünnwandige Rohre der Oberflächenstruktur der Stützhülse anpassen und damit eine die Auszugskraft erhöhende Wirkung entfalten. Im Übrigen ist die Steckmuffe der Fig. 9 identisch ausgebildet und ausgestattet wie im Ausführungsbeispiel der Figuren 1 und 2, und funktionsgleiche Teile sind daher auch mit den gleichen Bezugszeichen wie in den Figuren 1 und 2 bezeichnet.

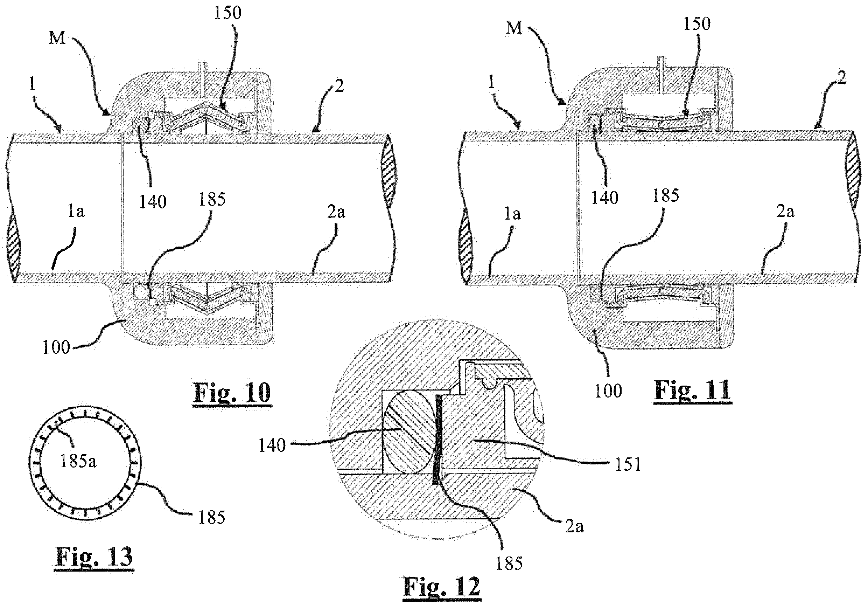

In den Figuren 10-13 ist eine Variante der erfindungsgemässen Steckmuffe dargestellt, bei der zur weiteren Erhöhung der Auszugskraft zwischen dem Klemmelement 150 und der Ringdichtung 140 eine Klemmsicherungsscheibe 185 angeordnet ist. Die Klemmsicherungsscheibe 185 ist in Fig. 13 (verkleinert) in Aufsicht dargestellt. Im Übrigen ist die Steckmuffe der Figuren 10-12 identisch ausgebildet und ausgestattet wie im Ausführungsbeispiel der Figuren 1 und 2, und funktionsgleiche Teile sind daher auch mit den gleichen Bezugszeichen wie in den Figuren 1 und 2 bezeichnet.

Die Klemmsicherungsscheibe 185 weist in an sich bekannter Weise nach innen gerichtete und aus der Scheibenebene herausgebogene Zähne bzw. Krallen 185a auf, welche im nicht aktivierten Zustand des Spannelements 150 die Oberfläche des Rohrabschnitts 2a nicht oder nur ganz leicht berühren (Fig. 10). Wenn das Spannelement 150 gespannt wird (Fig. 11), wird die Klemmsicherungsscheibe 185 verformt, wobei sich ihre Zähne bzw. Krallen 185a in die Oberfläche des Rohrabschnitts 2a eingraben, wie dies aus der Detaildarstellung der Fig. 12 hervorgeht. Dadurch wird die Auszugsfestigkeit erhöht. Es können auch mehrere, durch Abstandsringe getrennte Klemmsicherungsscheiben vorhanden sein.

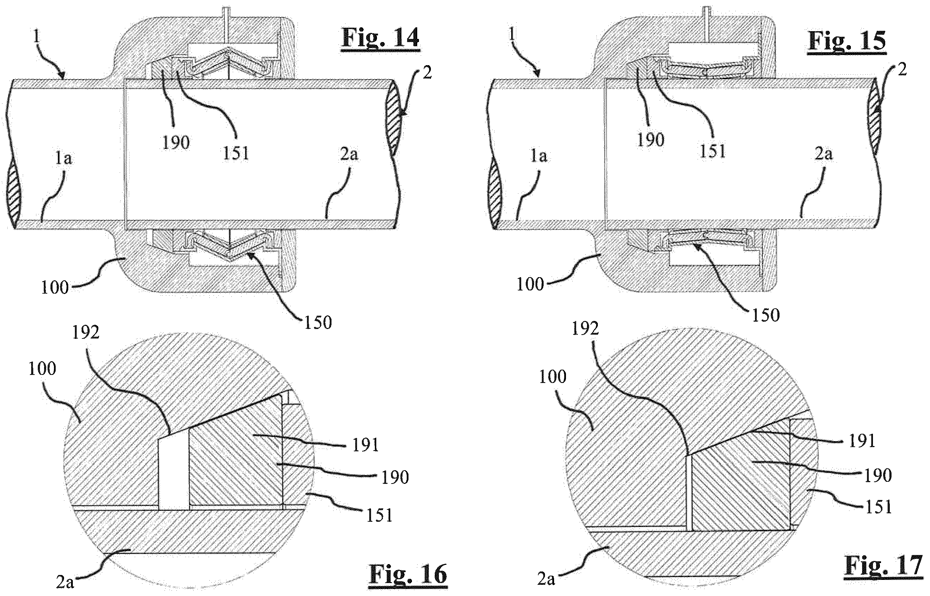

Die Figuren 14 - 17 zeigen ein Ausführungsbeispiel der erfindungsgemässen Steckmuffe, bei welchem anstelle einer Ringdichtung ein Ringelement 190 als Klemmelement vorgesehen ist. Im Übrigen ist die Steckmuffe der Figuren 14-17 identisch ausgebildet und ausgestattet wie im Ausführungsbeispiel der Figuren 1 und 2, und funktionsgleiche Teile sind daher auch mit den gleichen Bezugszeichen wie in den Figuren 1 und 2 bezeichnet.

Das Ringelement 190 weist eine konische Aussenfläche 191 auf, welche sich in Richtung vom Spannelement 150 weg verjüngt. Im Ende 100 der Steckmuffe ist eine gegengleiche Gegenfläche 192 vorgesehen, die mit der Konusfläche 191 des Ringelements 190 zusammenarbeitet. Das (axial im Wesentlichen inkompressible) Ringelement 190 befindet sich in Anlage am ersten Tragring 151 des Spannelements 150. Im nicht aktivierten Zustand des Spannelements 150 ist der Innendurchmesser des Ringelements 190 geringfügig grösser als der Aussendurchmesser des Endabschnitts 2a des zu haltenden Rohrs 2 (Fig. 14 und Detail-Darstellung Fig. 16). Bei Aktivierung des Spannelements 150 wird das Ringelement 190 aufgrund der Längenänderung des Spannelements 150 axial verschoben, wobei das Ringelement 190 mit seiner konischen Aussenfläche 191 entlang der Gegenfläche 192 gleitet und dabei radial gequetscht wird, so dass es sich dicht an die äussere Oberfläche des Endabschnitts 2a des Rohrs 2 anpresst und dieses dadurch festklemmt (Fig. 15 und Detail-Darstellung Fig. 17). Das Ringelement kann ggf. auch (z.B. nach Art eines Bohrfutters) segmentiert ausgebildet sein.

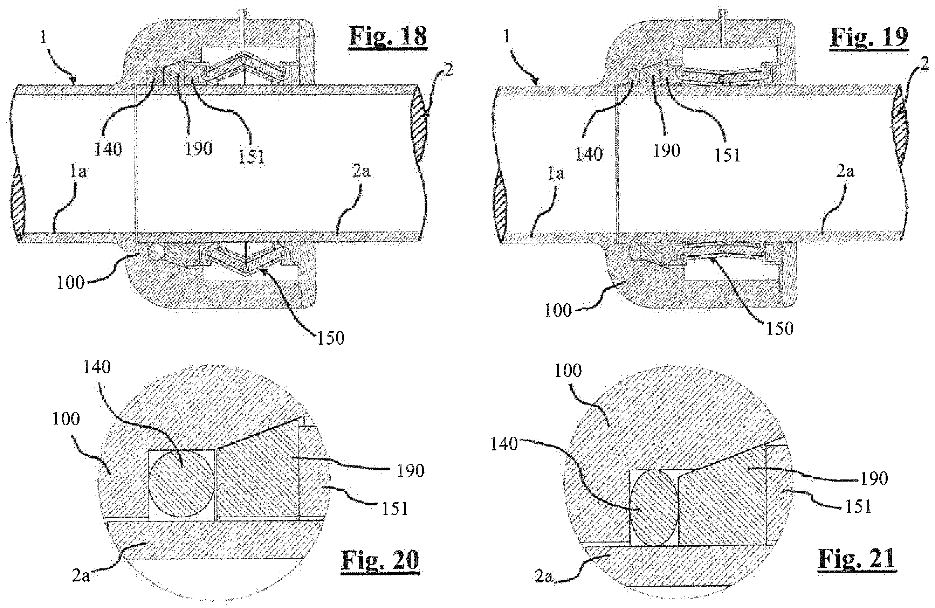

In den Figuren 18 - 21 ist schliesslich ein weiteres Ausführungsbeispiel der erfindungsgemässen Steckmuffe gezeigt, welches eine Kombination der Ausführungsbeispiele gemäss den Figuren 1 und 2 bzw. der Figuren 14 - 17 darstellt. Bei diesem Ausführungsbeispiel ist als Klemmelement sowohl eine Ringdichtung 140 als auch ein Ringelement 190 vorhanden. Ansonsten ist die Steckmuffe der Figuren 18 - 21 identisch ausgebildet und ausgestattet wie im Ausführungsbeispiel der Figuren 1 und 2, und funktionsgleiche Teile sind daher auch mit den gleichen Bezugszeichen wie in den Figuren 1 und 2 bezeichnet. Bei dieser Ausführungsvariante verschiebt das Spannelement 150 das Ringelement 190 und dieses komprimiert dadurch die Ringdichtung 140, wie dies insbesondere in den Detaildarstellungen der Figuren 20 und 21 verdeutlicht ist.

Selbstverständlich können auch die Ausführungsbeispiele der Figuren 6 und 7 sinngemäss wie die Ausführungsvarianten gemäss den Figuren 9 - 21 ausgebildet sein.

Die erfindungsgemässe Steckmuffe ist besonders für die Herstellung von Rohrverbindungen geeignet. Sie kann jedoch z.B. auch als Kabelverschraubung oder dergleichen eingesetzt werden. Die Steckmuffe ist nicht auf kreisrunde Querschnitte der zu verbindenden Teile beschränkt. Ferner kann die Steckmuffe auch als Deckel oder Abschlusskappe eingesetzt werden.

## Patentansprüche

1. Steckmuffe zur Befestigung auf einem insbesondere stangen-, kabel- oder rohrförmigen Gegenstand, mit einem ersten Ende (100), das eine Öffnung (110) für die Aufnahme eines Abschnitts (2a) des Gegenstands und ein Klemmelement (140; 190) aufweist, welche Steckmuffe an eine Aussenfläche des genannten Abschnitts (2a) anlegbar ist und ein im Wesentlichen hülsenförmiges, mit dem Klemmelement (140; 190) in Längsrichtung der Steckmuffe auf Schub koppelbares Spannelement (150) zur Beaufschlagung des Klemmelements (140; 190) mit einer axialen Kraft aufweist, wobei das Klemmelement (140; 190) so geformt und ausgebildet ist, dass es sich bei Beaufschlagung mit der axialen Kraft in radialer Richtung verengt, und das Spannelement (150) so ausgebildet und angeordnet ist, dass eine äussere Beaufschlagung mit einem fluiden Druckmedium eine axiale Verlängerung des Spannelements (150) und dadurch die Beaufschlagung des Klemmelements (140; 190) mit der axialen Kraft bewirkt und das Spannelement (150) von einer Ausgangsgestalt über eine Totpunktgestalt in eine Endgestalt überführbar ausgebildet ist, wobei die Länge des Spannelements (150) in der Ausgangsgestalt am kleinsten, in der Totpunktgestalt am grössten und in der Endgestalt etwas kleiner als in der Totpunktgestalt aber deutlich grösser als in der Ausgangsgestalt ist, **dadurch gekennzeichnet, dass** das Spannelement (150) eine Schnappfunktion aufweist, wobei das Spannelement von seiner Totpunktgestalt sprungartig in seine Endgestalt übergeht und ohne äussere Krafteinwirkung in dieser verharrt.

2. Steckmuffe nach Anspruch 1, **dadurch gekennzeichnet, dass** das Spannelement (150) so ausgebildet ist, dass es in seiner Ausgangsgestalt im Wesentlichen tonnenartig nach aussen gewölbt oder geknickt, in seiner Totpunktgestalt im Wesentlichen gestreckt und in seiner Endgestalt im Wesentlichen kissenartig nach innen gewölbt oder geknickt ist.

3. Steckmuffe nach Anspruch 1 oder 2, **dadurch gekennzeichnet, dass** im ersten Ende (100) eine umlaufende Kammer (130) ausgebildet ist, dass das Spannelement (150) in der Kammer (130) in Längsrichtung neben dem Klemmelement (140; 190) angeordnet ist und sich in Längsrichtung im Wesentlichen von einer stirnseitigen Begrenzungsfläche (131) der Kammer (130) bis zum Klemmelement (140; 190) erstreckt, und dass das Spannelement (150) zumindest in einem mittleren Abschnitt radial einwärts verformbar ausgebildet ist, wobei die radiale Einwärtsverformung des Spannelements (150) eine Verlängerung in Längsrichtung bewirkt, und wobei durch die Verlängerung des Spannelements (150) das Klemmelement (140; 190) mit der axialen Kraft beaufschlagt wird.

4. Steckmuffe nach Anspruch 3, **dadurch gekennzeichnet, dass** sie einen in die umlaufende Kammer (130) mündenden Anschluss (160) für ein fluides Druckmedium aufweist.

5. Steckmuffe nach einem der vorangehenden Ansprüche, **dadurch gekennzeichnet, dass** das Spannelement (150) einen ersten Tragring (151) und im Abstand zu diesem einen zweiten Tragring (152) und zwischen den beiden Tragringen (151, 152) eine Mehrzahl von Paaren plattenförmiger Glieder (153, 154) aufweist, wobei jeweils die Glieder (153, 154) eines Paares in Längsrichtung nebeneinander angeordnet und schwenkbar aneinander angelenkt sind und wobei jeweils ein Glied (153) eines Paares am ersten Tragring (151) und das andere Glied (154) eines Paares am zweiten Tragring (152) kippbar angelenkt ist, und wobei jeweils die beiden Glieder (153, 154) eines Paares zu einander geneigt angeordnet sind.

6. Steckmuffe nach Anspruch 5, **dadurch gekennzeichnet, dass** die Glieder (153, 154) und die Tragringe (151, 152) von einem elastischen Dichtungsschlauch (155) umschlossen sind.

7. Steckmuffe nach einem der vorangehenden Ansprüche, **dadurch gekennzeichnet, dass** das Klemmelement eine in einer umlaufenden Nut (120) angeordnete Ringdichtung (140) aufweist, dass sich die Ringdichtung (140) an einer Umfangsfläche (122) der Nut (120) einerseits und an einer Schulter (121) der Nut anderseits abstützt, und dass das Spannelement (150) in der Kammer (130) in Längsrichtung neben der Ringdichtung (140) angeordnet ist und sich in Längsrichtung im Wesentlichen von einer stirnseitigen Begrenzungsfläche (131) der Kammer (130) bis zur Ringdichtung (140) erstreckt, wobei durch die Verlängerung des Spannelements (150) die Ringdichtung (140) axial komprimiert wird.

8. Steckmuffe nach einem der Ansprüche 1-6, **dadurch gekennzeichnet, dass** das Klemmelement ein an seiner Aussenseite im Wesentlichen konisches Ringelement (190) aufweist, welches mit einer im ersten Ende (100) ausgebildeten, vorzugsweise im Wesentlichen gegengleich konischen Gegenfläche (192) so zusammenarbeitet, dass das Ringelement (190) durch die Beaufschlagung mit der axialen Kraft relativ zur Gegenfläche (192) axial verschiebbar und dabei radial verengbar ist.

9. Steckmuffe nach einem der vorangehenden Ansprüche, **dadurch gekennzeichnet, dass** sie zwischen dem Klemmelement (140; 190) und dem Spannelement (150) mindestens eine Klemmsicherungsscheibe (185) aufweist.

10. Steckmuffe nach einem der vorangehenden Ansprüche, **dadurch gekennzeichnet, dass** sie eine in einen rohrförmigen Gegenstand einführbare Stützhülse (175) aufweist.

11. Steckmuffe nach einem der vorangehenden Ansprüche, **dadurch gekennzeichnet, dass** sie einen Indikator (180) aufweist, welcher anzeigt, ob das Spannelement (150) seine Ausgangsgestalt oder seine Endgestalt einnimmt.

12. Steckmuffe nach einem der vorangehenden Ansprüche, **dadurch gekennzeichnet, dass** sie ein mit einem ersten Ende (100) einstückiges oder verbundenes und im Wesentlichen gleich wie das erste Ende (100) ausgebildetes und ausgestattetes zweites Ende (200) aufweist.

13. Steckmuffe nach Anspruch 12, **dadurch gekennzeichnet, dass** die Klemmelemente (140; 190) in den beiden Enden (100, 200) an den einander zugewandten Seiten der beiden Enden (100, 200) angeordnet sind.

## Claims

1. Socket for fastening on an in particular rod-form, cable-form or tube-form article, having a first end (100), which has an opening (110) for accommodating a portion (2a) of the article and also has a clamping element (140; 190), which socket can be positioned on an outer surface of the aforementioned portion (2a) and has an essentially sleeve-form bracing element (150) which can be coupled under shear loading to the clamping element (140; 190) in the longitudinal direction of the socket and is intended for subjecting the clamping element (140; 190) to an axial force, wherein the clamping element (140; 190) is formed, and designed, such that, when subjected to the axial force, it narrows in the radial direction, and the bracing element (150) is designed, and arranged, such that, when the clamping element (150) is subjected externally to the action of a fluid pressure medium, it extends axially and thus causes the clamping element (140; 190) to be subjected to the axial force, and the bracing element (150) is designed such that it can be transferred from a starting configuration, via a dead-centre configuration, into an end configuration, wherein the length of the bracing element (150) is smallest in the starting configuration, greatest in the dead-centre configuration and, in the end configuration,
somewhat smaller than in the dead-centre configuration but considerably greater than in the starting configuration, **characterized in that** the bracing element (150) has a snap-action function, wherein the bracing element transfers abruptly from its dead-centre configuration into its end configuration and remains in the latter without any external force acting thereon.

2. Socket according to Claim 1, **characterized in that** the bracing element (150) is designed such that it is curved or angled outwards essentially in the manner of a barrel in its starting configuration, is in an essentially straightened state in its dead-centre configuration, and is curved or angled inwards essentially in the manner of a cushion in its end configuration.

3. Socket according to Claim 1 or 2, **characterized in that** an encircling chamber (130) is formed in the first end (100), **in that** the bracing element (150) is arranged in the chamber (130) in the longitudinal direction alongside the clamping element (140; 190) and extends in the longitudinal direction essentially from an end-side boundary surface (131) of the chamber (130) to the clamping element (140; 190), and **in that** the bracing element (150) is designed such that it can be deformed radially inwards at least in a central portion, wherein the radial inward deformation of the bracing element (150) causes the latter to extend in the longitudinal direction, and wherein the action of the bracing element (150) extending subjects the clamping element (140; 190) to the axial force.

4. Socket according to Claim 3, **characterized in that** it has a connection (160) for a fluid pressure medium, said connection opening out into the encircling chamber (130).

5. Socket according to one of the preceding claims, **characterized in that** the bracing element (150) has a first carrying ring (151) and, at a distance therefrom, a second carrying ring (152) and, between the two carrying rings (151, 152), a plurality of pairs of plate-form members (153, 154), wherein the members (153, 154) of a respective pair are arranged one beside the other in the longitudinal direction and are articulated in a pivotable manner on one another, and wherein in each case one member (153) of a pair is articulated for tilting action on the first carrying ring (151) and the other member (154) of a pair is articulated for tilting action on the second carrying ring (152), and wherein the two members (153, 154) of a respective pair are inclined in relation to one another.

6. Socket according to Claim 5, **characterized in that** the members (153, 154) and the carrying rings (151, 152) are enclosed by an elastic sealing hose (155) .

7. Socket according to one of the preceding claims, **characterized in that** the clamping element has an annular seal (140) arranged in an encircling groove (120), **in that** the annular seal (140) is supported on a circumferential surface (122) of the groove (120), on the one hand, and on a shoulder (121) of the groove, on the other hand, and **in that** the bracing element (150) is arranged in the chamber (130) in the longitudinal direction alongside the annular seal (140) and extends in the longitudinal direction essentially from an end-side boundary surface (131) of the chamber (130) to the annular seal (140), wherein the action of the bracing element (150) extending causes the annular seal (140) to be compressed axially.

8. Socket according to one of Claims 1-6, **characterized in that** the clamping element, on its outer side, has an essentially conical annular element (190), which interacts with a mating surface (192), which is formed in the first end (100) and is preferably of essentially equal and opposite conical shaping, such that, by virtue of being subjected to the axial force, the annular element (190) can be displaced axially relative to the mating surface (192) and can be narrowed radially in the process.

9. Socket according to one of the preceding claims, **characterized in that** it has at least one clamping-action securing disc (185) between the clamping element (140; 190) and the bracing element (150).

10. Socket according to one of the preceding claims, **characterized in that** it has a supporting sleeve (175), which can be introduced into a tube-form article.

11. Socket according to one of the preceding claims, **characterized in that** it has an indicator (180), which indicates whether the bracing element (150) is in its starting configuration or its end configuration.

12. Socket according to one of the preceding claims, **characterized in that** it has a second end (200), which is in one piece with, or connected to, a first end (100) and is designed, and equipped, essentially in the same way as the first end (100) .

13. Socket according to Claim 12, **characterized in that** the clamping elements (140; 190) are arranged in the two ends (100, 200) on the mutually opposite sides of the two ends (100, 200).

## Revendications

1. Manchon enfichable destiné à être fixé sur un objet en forme de tige, de câble ou de tube, comportant une première extrémité (100) qui présente une ouverture (110) destinée à recevoir un segment (2a) de l'objet et un élément de blocage (140 ; 190), lequel manchon enfichable peut être disposé sur une surface extérieure du segment (2a) cité et un élément de serrage (150) essentiellement en forme de douille susceptible d'être couplé avec l'élément de blocage (140 ; 190) en étant poussé dans la direction longitudinale du manchon enfichable en vue de soumettre l'élément de blocage (140 ; 190) à une force axiale, l'élément de blocage (140 ; 190) étant conformé et agencé de manière telle qu'il se rétrécit dans la direction radiale lorsqu'il est soumis à la force axiale et l'élément de serrage (150) étant conformé et agencé de manière à ce qu'une action extérieure exercée au moyen d'un fluide de pression provoque un allongement axial de l'élément de serrage (150) et, de ce fait, la soumission de l'élément de blocage (140 ; 190) à la force axiale et l'élément de serrage (150) est agencé de manière à pouvoir passer d'une forme initiale à une forme finale, en passant par une forme de point mort, la longueur de l'élément de serrage (150) étant la plus faible dans sa forme initiale, et la plus importante dans sa forme de point mort, et étant, dans sa forme finale, quelque peu plus faible que dans sa forme de point mort, mais nettement plus importante que dans sa forme initiale, **caractérisé en ce que** l'élément de serrage (150) est doté d'une fonction de déclic, l'élément de serrage passant brusquement de sa forme de point mort à sa forme finale et en se bloquant dans celle-ci sans qu'une force extérieure soit exercée.

2. Manchon enfichable selon la revendication 1 **caractérisé en ce que** l'élément de serrage (150) est agencé de telle manière que dans sa forme initiale il est bombé ou plié vers l'extérieur essentiellement en forme de tonneau, que dans sa forme de point mort, il est essentiellement étendu et que dans sa forme finale il est essentiellement bombé vers l'intérieur, ou plié vers l'intérieur, essentiellement comme un coussin.

3. Manchon enfichable selon la revendication 1 ou 2 **caractérisé en ce qu'**à la première extrémité (100) une chambre circulaire (130) est formée, **en ce que** l'élément de serrage (150) est disposé dans la chambre (130) dans la direction longitudinale à côté de l'élément de blocage (140 ; 190) et qu'il s'étend dans la direction longitudinale essentiellement depuis une surface de limitation frontale (131) de la chambre (130) jusqu'à l'élément de blocage (140 ; 190) et **en ce que** l'élément de serrage (150) est agencé de façon à être déformable radialement vers l'intérieur au moins dans un tronçon médian, la déformation radiale vers l'intérieur de l'élément de serrage (150) provoquant un allongement dans la direction longitudinale et l'élément de blocage (140 ; 190) étant soumis à la force axiale du fait de l'allongement de l'élément de serrage (150).

4. Manchon enfichable selon la revendication 3 **caractérisé en ce qu'**il présente un raccord (160) pour fluide de pression qui débouche dans la chambre circulaire (130).

5. Manchon enfichable selon l'une des revendications qui précèdent **caractérisé en ce que** l'élément de serrage (150) présente une première bague de support (151) et, avec un écart par rapport à celle-ci une deuxième bague de support (152) et entre les deux bagues de support (151, 152) une pluralité de paires d'éléments (153, 154) en forme de plaques, les éléments (153, 154) d'une paire étant dans chaque cas disposés l'un à côté de l'autre dans la direction longitudinale et étant articulés de façon pivotante l'un par rapport à l'autre et, dans chaque cas, un élément (153) d'une paire étant articulé de manière basculante sur la première bague de support (151), l'autre élément (154) d'une paire étant articulé de manière basculante sur la deuxième bague de support (152) et les deux éléments (153, 154) d'une paire étant dans chaque cas disposés de façon à être inclinés l'un par rapport à l'autre.

6. Manchon enfichable selon la revendication 5 **caractérisé en ce que** les éléments (153, 154) et les bagues de support (151, 152) sont entourés par un tuyau d'étanchéité élastique (155).

7. Manchon enfichable selon l'une des revendications qui précèdent **caractérisé en ce que** l'élément de blocage est doté d'un joint annulaire (140) disposé dans une gorge circulaire (120), **en ce que** le joint annulaire (140) s'appuie diamétralement sur une surface circulaire (122) de la gorge (120) et d'autre part sur un épaulement (121) de la gorge et **en ce que** l'élément de serrage (150) est disposé dans la chambre (130) à côté du joint annulaire (140) dans la direction longitudinale et **en ce qu'**il s'étend dans la direction longitudinale essentiellement depuis une surface de limitation frontale (131) de la chambre (130) jusqu'au joint annulaire (140), le joint annulaire (140) étant comprimé axialement du fait de l'allongement de l'élément de serrage (150).

8. Manchon enfichable selon une des revendications 1 à 6 **caractérisé en ce que** l'élément de blocage présente un élément annulaire essentiellement conique (190) sur son côté extérieur, lequel coopère avec une surface antagoniste (112) conique réalisée en étant dotée d'une première extrémité (100), de préférence essentiellement selon une symétrie spéculaire, **en ce que** l'élément annulaire (190) peut être poussé axialement par rapport à la surface antagoniste (192) du fait qu'il est soumis à la force axiale, et de ce fait, peut être rétréci radialement.

9. Manchon enfichable selon une des revendications qui précèdent **caractérisé en ce qu'**il présente au moins une rondelle (185) de sûreté de blocage entre l'élément de blocage (140 ; 190) et l'élément de serrage (150).

10. Manchon enfichable selon une des revendications qui précèdent **caractérisé en ce qu'**il présente une douille d'appui (175) qui peut être introduite dans un objet tubulaire.

11. Manchon enfichable selon une des revendications qui précèdent **caractérisé en ce qu'**il présente un indicateur (180) qui indique si l'élément de serrage (150) est dans sa forme initiale ou bien dans sa forme finale.

12. Manchon enfichable selon une des revendications qui précèdent **caractérisé en ce qu'**il présente une deuxième extrémité (200), essentiellement semblable à la première extrémité (100), formée et constitué en une seule pièce avec une première extrémité (100) ou bien reliée à celle-ci.

13. Manchon enfichable selon la revendication 12 **caractérisé en ce que** les éléments de blocage (140 ; 190) sont disposés dans les deux extrémités (100 ; 200) sur les côtés des deux extrémités (100 ; 200) orientés l'un vers l'autre.
